# EUROPEAN PATENT SPECIFICATION

(11) **EP 2 180 210 B1**
(45) Date of publication and mention of the grant of the patent: **15.02.2012**
(21) Application number: 09013371.1
(22) Date of filing: 22.10.2009
(51) Int. Cl.: F16H 1/32

(54) **Reduction gear**
Untersetzungsgetriebe
Mécanisme réducteur

(30) Priority: 24.10.2008 JP 2008274812
(43) Date of publication of application: 28.04.2010
(73) Proprietor: Sumitomo Heavy Industries, LTD., Tokyo 141-6025 (JP)
(72) Inventor: Tamenaga, Jun c/o Sumitomo Heavy Industries, LTD., Tokyo 141-6025 (JP); Haga, Takashi c/o Sumitomo Heavy Industries, LTD., Tokyo 141-6025 (JP); Ishikawa, Tetsuzo c/o Sumitomo Heavy Industries, LTD., Tokyo 141-6025 (JP)
(74) Representative: Carstens, Dirk Wilhelm

(56) References cited:
- EP-A- 0 594 549
- DE-A1- 10 342 132
- DE-A1-102005 019 474
- DE-A1-102007 013 164
- DE-B3-102006 002 305
- GB-A- 1 274 406
- JP-A- 3 041 240
- JP-A- 5 044 720
- JP-A- 60 184 749

## Description

### BACKGROUND OF THE INVENTION

### Field of the Invention

The present invention relates to a decelerating device having a main bearing interposed between an output member and a fixed member.

### Description of the Related Art

JP-A-06 200996 (see in particular paragraph [0026] and Fig. 6) discloses a decelerating device including an angular roller bearing as a main bearing interposed between an output member and a fixed member. The angular roller bearing is directly installed between the output member and the fixed member and does not include exclusive inner and outer races.

Meanwhile, JP-A-03 041240 and corresponding JP-B-2741711 (see in particular lines 32 to 37 on Page 2 and Fig. 1) discloses a decelerating device including a taper roller bearing as a main bearing. Even in the decelerating device, "a taper roller" as a rolling element is directly interposed between an output flange as an output member and a casing member as a fixed member, where the output member also serves as an inner race and the casing member also serves as an outer race.

As disclosed in JP-A-06 200996 as well as JP-A-03 041240 and corresponding JP-B-2741711, in the main bearing having a bearing structure in which the output member also serves as the inner race and the casing member (fixed member) also serves as the outer race, the output member and the casing member are required to be formed by a high-strength material corresponding to so-called "bearing steel" (or a surface hardening treatment is required to be performed on the vicinity of a rolling surface). As a result, problems arise in that the cost of the decelerating device increases, the workability deteriorates, and the degree of design freedom of the decelerating device deteriorates.

DE-A-10 2007 013 164 discloses a rolling bearing which has a braking device, particularly a rotational connection, with an outer bearing race and an inner bearing race between which rolling bodies are in rolling motion on associated tracks. In order to produce a braking effect using frictional engagement, a displaceable braking element connected to one of the bearing races is pressed against a counter surface connected to the associated other bearing race and the frictional engagement may be removed with the aid of an electromagnet. The braking element is disposed as an integral bearing component inside one of the bearing races and is pressed against the counter surface by spring force, and the electromagnet encompasses one of the bearing races as the soft iron core and a coil surrounding the soft iron core.

DE-A-103 42 132 discloses a thin-race bearing constituted as an inclined-roller bearing whose running surfaces are produced by a chipless forming process.

JP-A-60 184749 discloses a reduction gear unit. In order to obtain a cheap bearing and as well to increase the load capacity thereof by about 50%, a bearing for a reduction gear unit is constituted only with outer and inner races each having a width substantially equal to one-half of the width of the bearing, and balls. Ball bearings are fitted onto the outer peripheral sections of a disc-like part and an end disc of the casing of a reduction gear unit to rotatably support a hub. The bearings are composed of outer ring and inner rings, each having a width substantially equal to the width of the associated bearing.

With regard to the available prior art, attention is also drawn to DE-A-10 2005 019 474, GB-A-1 274 406, DE-B-10 2006 002 305, and JP-A-05 044720.

### SUMMARY OF THE INVENTION

The present invention is contrived to solve the above-described problems, and an object of the invention is to provide a low-cost decelerating device having a high degree of design freedom.

The above-described object is achieved by a decelerating device as set forth in claim 1. Preferred embodiments of the present invention may be gathered from the dependent claims.

In the invention, "a simple cylindrical roller" is used as the rolling element of the main bearing instead of a so-called "taper roller". The cylindrical roller has the rotation axis inclined relative to the axis of the output member. For this reason, the cylindrical roller is low cost, and can satisfactorily receive both radial and thrust loads. In addition, since each cylindrical roller comes into line contact with the rolling surface of the sheet metal, the load withstanding property is large and the backlash is small.

In addition, although the main bearing according to the invention includes the inner and outer races, "the sheet metal" is used instead of the exclusive bearing inner or outer race. "The sheet metal" mentioned herein indicates "a member which is mounted so that the rolling surface is parallel to the opposite rolling surface, and the inclined angle formed by the rolling surface and the opposite rolling surface relative to the axis of the output member is equal to the inclined angle formed by the cylindrical roller relative to the axis of the output member". In short, the sheet metal is formed by deforming one steel sheet, and the rolling surface has a characteristic such as sufficient hardness. However, the sheet metal is a member which does not necessarily have rigidity (particularly, the rigidity for maintaining the circularity) required for the inner and outer races of a so-called bearing. Since the sheet metal has a characteristic such as hardness for the rolling surface, the output member or the fixed member is not required to be formed by bearing steel, and basically the surface hardening treatment or the like for the rolling surface is not required. Accordingly, it is possible to realize a decrease in cost of the decelerating device and to improve a degree of design freedomof the decelerating device.

Further, since the sheet metal has a high degree of design freedom, it is possible to easily perform a positioning operation of the cylindrical roller or the sheet metal, and for example, to actively use the sheet metal for a positioning operation for other members as described below. Accordingly, it is possible to improve a degree of design freedom of the decelerating device.

Furthermore, "the output member" and "the fixed member" mentioned in the invention have a relative relationship therebetween. For example, in the case where the invention is used to drive a robot link, when a main member is changed, the output member and the fixed member are inverted. In addition, since the link of the robot is moved, the output member and the fixed member are moved when viewed from the factory base. That is, the fixed member mentioned in the invention does not indicate a member which is always in a stationary state. However, among the respective members of the decelerating device, the output member rotates relative to the fixed member at a very slow speed and a very large torque. That is, "the main bearing" according to the invention indicates a bearing which has a very slow (for example, 100 rpm or less) relative rotation speed in the bearings of the decelerating device and is used for a position where a torque is very large (or a position corresponding to the large-torque position).

According to the invention, it is possible to obtain the low-cost decelerating device having a high degree of design freedom.

### BRIEF DESCRIPTION OF THE DRAWINGS

Fig. 1 is a sectional view showing a decelerating device according to an embodiment of the invention.
Fig. 2 is an enlarged view showing a main part of the decelerating device shown in Fig. 1.
Fig. 3A is an exploded sectional view showing the vicinity of a main bearing, and Fig. 3B is a sectional view taken along the line IIIB-IIIB in Fig. 3A.
Fig. 4 is a sectional view showing the decelerating device according to another embodiment of the invention.
Fig. 5 is an enlarged view showing a main bearing according to the embodiment.
Fig. 6 is a sectional view showing the decelerating device according to still another embodiment of the invention.

### DETAILED DESCRIPTION OF THE INVENTION

Hereinafter, embodiments of the invention will be described in detail with reference to the accompanying drawings.

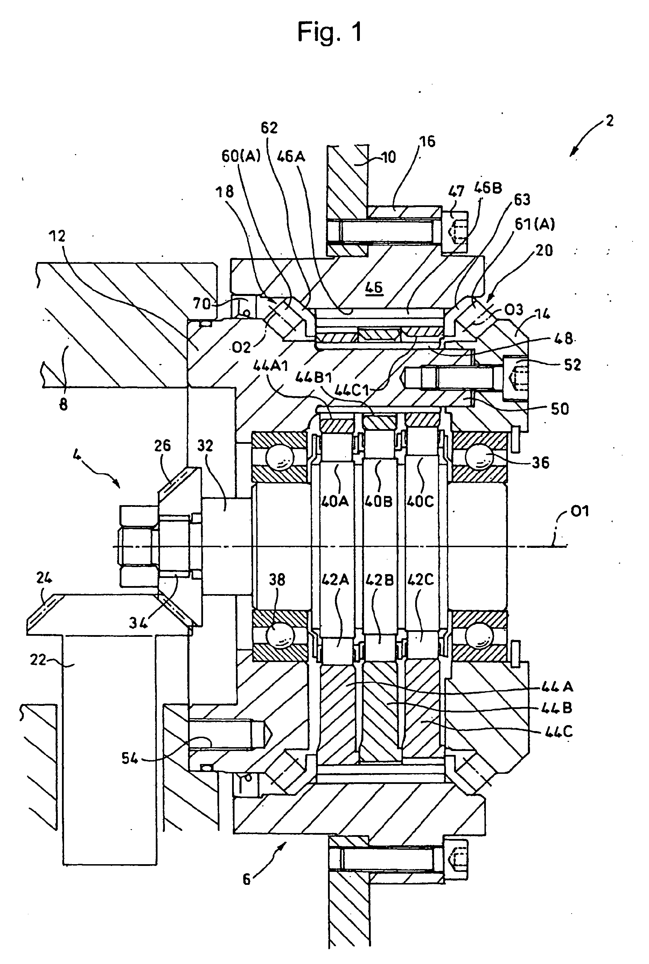

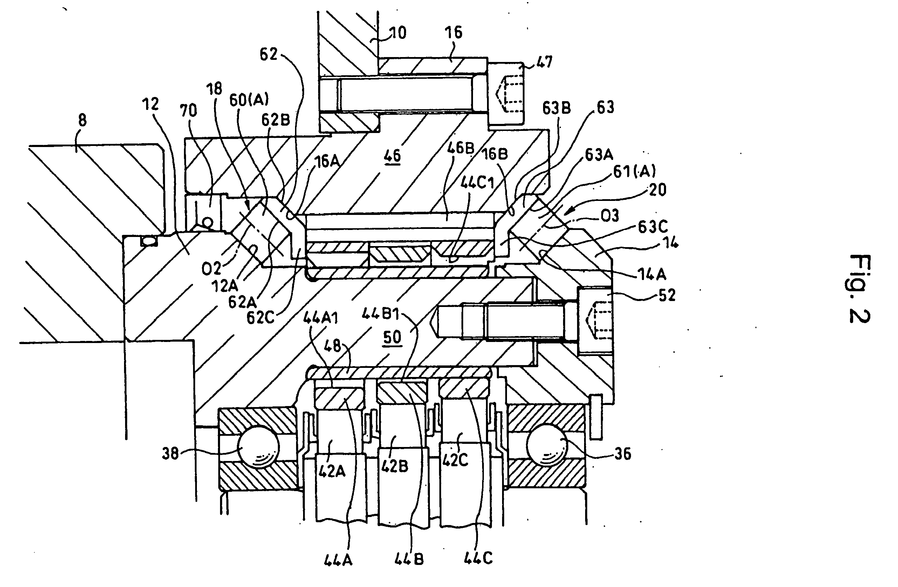

Fig. 1 is a sectional view showing a robot precise control machine adopting a decelerating device according to an embodiment of the invention, and Fig. 2 is an enlarged view showing a main part thereof.

A decelerating device 2 is used for a precise machine having, for example, a backlash of 15 minutes (15/60 degree) to 1 minute (1/60 degree) for controlling a robot, and includes a uniform-speed orthogonal gear mechanism 4 which is formed in the front end thereof so as to receive driving force from a motor (not shown) and a deceleration gear mechanism 6 which is formed in the rear end thereof and has an internally meshing planetary gear structure. The decelerating device 2 is disposed between a first member 8 and a second member 10 of a robot (which is partially shown in the drawing), and the second member 10 is rotationally driven relative to the first member 8. Accordingly, in the embodiment, first and second flange bodies 12 and 14 to be described later correspond to fixed members and a casing 16 corresponds to an output member. That is, the decelerating device is of a so-called frame rotation type.

Among a pair of main bearings 18 and 20 according to the invention, the first main bearing 18 is mounted between the first flange body 12 and the casing 16, and the second main bearing 20 is mounted between the second flange body 14 and the casing 16.

Hereinafter, the configuration will be described in detail.

A first bevel gear 24 is formed in the front end of a motor shaft 22 by cutting. The uniform-speed orthogonal gear mechanism 4 is formed in such a manner that the first bevel gear 24 meshes with a second bevel gear 26 having the same dimension as that of the first bevel gear 24, and a right angle is formed in the rotation direction thereof. The second bevel gear 26 is connected to an input shaft 32 of a rear-stage deceleration gear mechanism 6 through a spline 34. The (rear-stage) input shaft 32 is supported to the first and second flange bodies 12 and 14 through a pair of ball bearings 36 and 38. Three eccentric bodies 40A to 40C are integrally formed with the input shaft 32. The eccentric phases of the eccentric bodies 40A to 40C are deviated from each other by 120 degrees in the circumferential direction. External tooth gears 44A to 44C, which are three in total, are mounted to the outer peripheries of the eccentric bodies 40A to 40C through rollers 42A to 42C so as to be oscillatingly rotatable. The external tooth gears 44A to 44C internally mesh with an internal tooth gear 46.

The dimension of the internal tooth gear 46 is set to be larger than those of the external tooth gears 44A to 44C by "1". In the embodiment, the internal tooth gear 46 is incorporated into the casing 16, and serves as a (frame-rotation-type) output member. In addition, the internal tooth of the internal tooth gear 46 is formed in a circular arc saw-toothed shape, and in detail, is formed by a cylindrical outer pin 46B which is rotatably fitted into a circular-arc-shaped groove 46A. The internal tooth gear 46 is connected to the second member 10 of the robot through a bolt 47. The main bearings 18 and 20 are disposed in the inner peripheries of both axial ends of the internal tooth gear 46. The configuration of the vicinity of the internal tooth gear 46 and the main bearings 18 and 20 will be described in detail later.

Plural inner pin holes 44A1 to 44C1 are respectively formed in the external tooth gears 44A to 44C so as to penetrate therethrough in the axial direction. An inner pin 50 (having a gap corresponding to the eccentric amounts of the eccentric bodies 40A to 40C) covered by an inner roller 48 is loosely inserted into the inner pin holes 44A1 to 44C1. The inner pin 50 is integrally formed with the first flange body 12 so as to protrude therefrom, and is connected to the second flange body 14 through a bolt 52. Accordingly, both the first and second flange bodies 12 and 14 serve as fixed members which are integrally fixed to the first member 8 of the robot.

In addition, the reference numeral 54 in the drawing denotes a bolt hole used for connecting the first member 8 of the robot to the first flange body 12. The first member 8 of the robot and the first flange body 12 are connected to each other in such a manner that a bolt (not shown) is inserted into the bolt hole 54 at a portion where the motor shaft 22 does not exist.

Next, the circumferential configuration of the main bearings 18 and 20 will be described in detail with reference to Figs. 1 to 3.

In the embodiment, a pair of main bearings 18 and 20 is interposed between the casing 16 which is the output member (located on the outside of the fixed members in the radial direction) and the first and second flange bodies 12 and 14 which are the fixed members. The main bearings 18 and 20 include a pair of cylindrical roller rows 60 and 61 which are rolling elements mounted by a back face combination. The cylindrical roller rows 60 and 61 are respectively formed by plural cylindrical rollers 60A and 61A which are arranged so as to have the rotation axes 02 and 03 inclined by 45 degrees relative to the axis O1 of the first and second flange bodies 12 and 14. As the cylindrical rollers 60A and 61A, a cylindrical roller using a so-called cross roller bearing and having the same diameter and height (axial length) may be used.

In the embodiment, sheet metals 62 and 63 forming outer races of the main bearings 18 and 20 are disposed only on the side of the casing 16 as the output member. In an inner race side, rolling surfaces 12A and 14A are directly formed in the first and second flange bodies 12 and 14. In the sheet metals 62 and 63, both the rolling surfaces 62A and 63A and opposite rolling surfaces 62B and 63B are parallel to the rotation axes 02 and 03 of the cylindrical rollers 60A and 61A. That is, the rolling surfaces 62A and 63A and the opposite rolling surfaces 62B and 63B of the sheet metals 62 and 63 are inclined by 45 degrees relative to the axis O1 of the first and second flange bodies 12 and 14. The sheet metals 62 and.63 are formed by bending one steel-sheet to be deformed. As the material of the sheet metals 62 and 63, steel such as S55C, SCM440, SCM420, or SUJ2 suitable for a bearing may be selected.

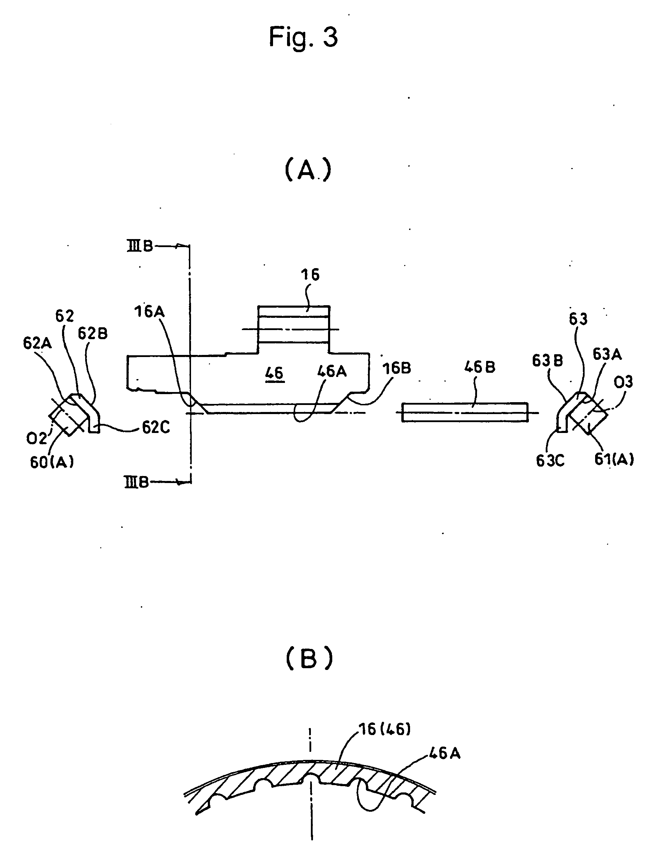

As shown in Fig. 3, a pair of receiving surfaces 16A and 16B is formed in the inner peripheries of both axial ends of the casing 16 so as to receive the load from the sheet metals 62 and 63. The receiving surfaces 16A and 16B are formed to be parallel to the rotation axes 02 and 03 of the cylindrical rollers 60A and 61A. Since the receiving surfaces 16A and 16B do not form the rolling surface, in the embodiment, the casing 16 is formed by cast iron (casting) , and no particular surface hardening treatment or the like is performed on the receiving surfaces 16A and 16B. In addition, the circular-arc-shaped grooves 46A are punched in the axial direction between the receiving surfaces 16A and 16B so as to support the outer pin 46B forming the internal tooth of the internal tooth gear 46, and the outer pin 46B is rotatably mounted to the groove 46A. With such a configuration, it is possible to increase the diameter of the internal tooth gear 46. Accordingly, it is possible to increase the torque and to easily perform a mounting operation of the outer pin 46B. In addition, "holes" may be formed in the receiving surfaces 16A and 16B instead of "grooves" in accordance with the diameter of the outer pin 46B or the shape of the casing 16 (for example, in the case where the entire part of the outer pin 46B is mounted so as to be located on the outside of the minimum diameter portions of the receiving surfaces 16A and 16B in the radial direction). Further, the assembling groove or hole for the outer pin 46B may be formed in only one of the receiving surfaces (16A or 16B) (it is not necessary to mount the outer pin 46B on both receiving surfaces 16A and 16B).

In the embodiment, the sheet metals 62 and 63 extend inward in the radial direction up to a position deviated from the rolling surfaces 62A and 63A, and extending portions 62C and 63C regulate the axial movement of the outer pin 46B. Further, the sheet metals 62 and 63 according to the embodiment regulate the axial movement of the external tooth gears 44A and 44C by the extending portions 62C and 63C. For this reason, in the embodiment, the sheet metals 62 and 63, each forming one member, are used to fulfill three functions, that is, the outer races of the main bearings 18 and 20, the axial movement regulation member of the outer pin 46B, and the axial movement regulation member of the external tooth gears 44A and 44C.

In addition, the reference numeral 70 in the drawing denotes an oil seal.

Next, the action of the decelerating device 2 will be described.

When the motor shaft 22 rotates, the first bevel gear 24 formed in the motor shaft 22 rotates. When the first bevel gear 24 rotates, the second bevel gear 26 meshing with the first bevel gear 24 rotates, and the input shaft 32 of the rear-stage deceleration gear mechanism 6 rotates through the spline 34. When the input shaft 32 rotates, three external tooth gears 44A to 44C eccentrically oscillate through the eccentric bodies 40A to 40C and the rollers 42A to 42C so that the phase changes by 120 degrees in the circumferential direction.

In the embodiment, since the inner pin 50 penetrates through the inner pin holes 44A1 to 44C1 of the external tooth gears 44A to 44C, and is fixed to the first member 8 of the robot while being incorporated into the first and second flange bodies 12 and 14, the rotation of the external tooth gears 44A to 44C is not allowed. For this reason, when the external tooth gears 44A to 44C rotate once due to the input shaft 32 rotating once, the meshing positions between the external tooth gears 44A to 44C and the internal tooth gear 46 are sequentially deviated due to the oscillation of the external tooth gears 44A to 44C, and hence a phenomenon occurs in which the internal tooth gear 46 rotates relative to the external tooth gears 44A to 44C by an amount corresponding to a dimension difference of "1". The rotation of the internal tooth gear 46 is expressed as the rotation of the casing 16 incorporated into the internal tooth gear 46, and rotates the second member 10 of the robot (relative to the first member 8 of the robot) through the bolt 47. In addition, the rotation speed is 100 rpm at maximum in the case of, for example, the decelerating device 2 for driving the robot as in the embodiment. This rotation speed can sufficiently allow the practical use of "the cylindrical roller". On the contrary, when the rotation speed becomes fast, a speed difference between the inner race and the outer race becomes large, which may undesirably cause such a problem that lubricant is dried due to overheating and the decelerating device is damaged.

Here, in the embodiment, the first and second flange bodies 12 and 14 are supported to the inner peripheries of both axial ends of the casing 16 through the pair of main bearings 18 and 20 mounted by the back face combination. In the cylindrical rollers 60A and 61A of the main bearings 18 and 20, the inner-race-side portions thereof come into direct contact with the rolling surfaces 12A and 14A of the first and second flange bodies 12 and 14. That is, the first and second flange bodies 12 and 14 serve as the inner races of the cylindrical rollers 60Aand 61A. In addition, in the outer-race-side portions thereof, the cylindrical rollers 60A and 61A respectively come into contact with the rolling surfaces 62A and 63A of the sheet metals 62 and 63, and the opposite rolling surfaces 62B and 63B of the sheet metals 62 and 63 come into contact with the receiving surfaces 16A and 16B of the casing 16. For this reason, the sheet metals 62 and 63 provide hardness for the rolling surfaces 62A and 63A of the main bearings 18 and 20. Meanwhile, the receiving surfaces 16A and 16B of the casing provide circularity and rigidity for the main bearings 18 and 20 by supporting the rear surfaces of the sheet metals 62 and 63. Accordingly, since the casing 16 is not required to be formed by steel such as bearing steel and can be sufficiently formed by casting, it is possible to manufacture the heavy and large casing 16 at a low cost. In addition, since the casing 16 does not provide the rolling surfaces of the main bearings 18 and 20, it is not necessary to perform a particular surface hardening treatment on the receiving surfaces 16A and 16B. As described above, it is possible to improve the degree of design freedom of the deceleration device. Meanwhile, since the opposite rolling surfaces 62B and 63B of the sheet metals 62 and 63 are supported by the receiving surfaces 16A and 16B of the casing 16, it is not necessary to ensure circularity or rigidity of the sheet metals 62 and 63 (the circularity and the rigidity are required in the case of an outer race of a general bearing). Accordingly, as the rolling surfaces 62Aand 63A, a material tested from the viewpoint of a predetermined characteristic (for example, hardness, a friction coefficient, and the like) may be used. In addition, since each of the sheet metals 62 and 63 can be formed by one steel sheet, it is possible to decrease the cost of the sheet metals.

In addition, in the embodiment, since the sheet metals 62 and 63 extend inward in the radial direction up to a position deviated from the rolling surfaces 62A and 63A, and the extending portions 62C and 63C performs the axial movement regulation of the outer pin 46B forming the internal tooth of the internal tooth gear 46 and the axial movement regulation of the external tooth gears 44A to 44C, it is not necessary to prepare an additional configuration for realizing these functions. For this reason, it is possible to decrease the number of components of the decelerating device 2 as a whole and to simplify the manufacturing process. This advantage is obtained by actively using a fact that the sheet metals 62 and 63 are not the exclusive outer races formed for only the main bearings 18 and 20, but the members each formed by one steel sheet.

Since the cylindrical rollers 60A and 61A are "simple cylindrical roller", the cylindrical rollers 60A and 61A are low cost. In addition, since the rotation axes 02 and 03 are parallel to the outer peripheries (surfaces coming into contact with the rolling surfaces 62A and 63A), basically, no force component moving in the axial direction is generated. For this reason, it is possible to omit or simplify the axial regulation means of the cylindrical rollers 60A and 61A, and to suppress the overheating. In addition, the plural cylindrical rollers 60A and 61A are mounted as "the pair of back face combined cylindrical roller rows 60 and 61". For this reason, it is possible to satisfactorily receive both radial and thrust loads. Further, since the cylindrical rollers 60A and 61A come into line contact with the rolling surfaces 62A and 63A of the sheet metals 62 and 63, the load withstanding property is large and the backlash is small.

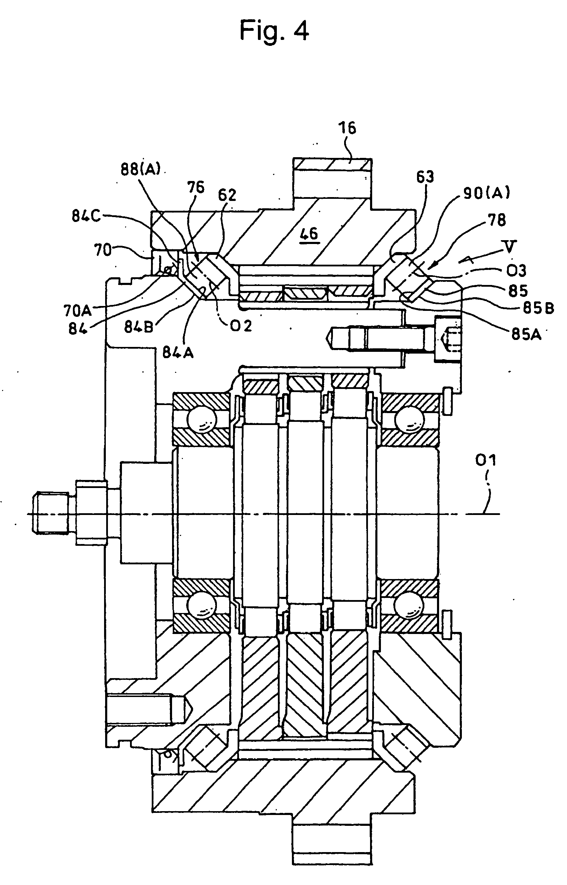

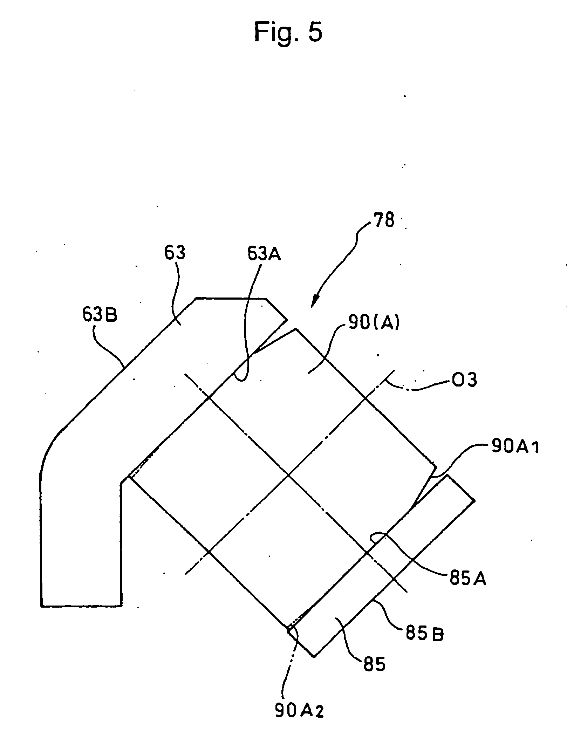

Next, an example according to another embodiment of the invention will be described with reference to Figs. 4 and 5.

In the embodiment, the outer-race-side sheet metals which are the same as the sheet metals 62 and 63 according to the above-described embodiment are used for the outer races of main bearings 76 and 78, and inner-race-side sheet metals 84 and 85 are used for the inner races thereof. This embodiment is equal to the above-described embodiment in that a pair of cylindrical roller rows 88 and 90 mounted by a back face combination is provided as the rolling elements of the main bearings 76 and 78, and the cylindrical roller rows 88 and 90 are formed by plural cylindrical rollers 88A and 90A disposed so as to have the rotation axes 02 and 03 inclined by 45 degrees relative to the axis O1 of the first and second flange bodies 12 and 14. In addition, in the inner-race-side sheet metals 84 and 85, both rolling surfaces 84A and 85A and opposite rolling surfaces 84B and 85B are parallel to the rotation axes 02 and 03 of the cylindrical rollers 88A and 90A (in the same manner as the outer-race-side sheet metals 62 and 63).

Here, the inner-race-side sheet metals 84 and 85 are formed by steel sheet thinner than that of the outer-race-side sheet metals 62 and 63. This is because the balance between the torque and the durability of the inner-race-side sheet metals 84 and 85 and the outer-race-side sheet metals 62 and 63 is considered. Particularly, in the embodiment, it is desirable that the outer-race-side portion is thick so as to have a function of pressing the outer pin 46B or the external tooth gears 44A to 44C. The inner-race-side sheet metal 84 on the side of the first flange body 12 extends outward in the radial direction up to a position deviated from the rolling surface 84A, and a dust lip 70A of the oil seal 70 comes into contact with the extending portion 84C. As a result, it is possible to further improve the function of the oil seal 70, and to further appropriately perform the positioning operation of the oil seal 70 in the axial direction (for example, without such a problem that the oil seal 70 excessively moves inward). In addition, since the inner-race-side sheet metal 85 used on the side of the second flange body 14 does not have "a relationship with the oil seal" as in the first flange body 12, the inner-race-side sheet metal 85 has a simple linear sectional shape in which only the positions corresponding to the rolling surface 85A and the opposite rolling surface 85B exist.

In addition, in the embodiment, as shown in Fig. 5, a crowning portion 90A1 is formed in the axial end of the cylindrical roller 90A (although it is not shown in the drawing, the same applies to the cylindrical roller 88A), even when a reaction force is generated by the movement of the robot, a peak load called a so-called edge load does not occur in the axial end of the cylindrical roller 90A.

In the embodiment, the crowning portion 90A1 is formed in only the axial outer end of the decelerating device 2, but a crowning portion 90A2 (depicted by the two-dot chain line) may be formed in the axial inner end of the decelerating device. Even in this case, it is desirable that the crowning amount of the axial outer crowning portion 90A1 of the decelerating device 2 is larger than that of the axial inner crowning portion 90A2. This is because the edge load easily occurs when the displacement of the axial-outer-side portion becomes larger in the case where the torsion displacement occurs in the inner and outer races of the main bearings 76 and 78. Here, of course, the crowning portions may have the same size.

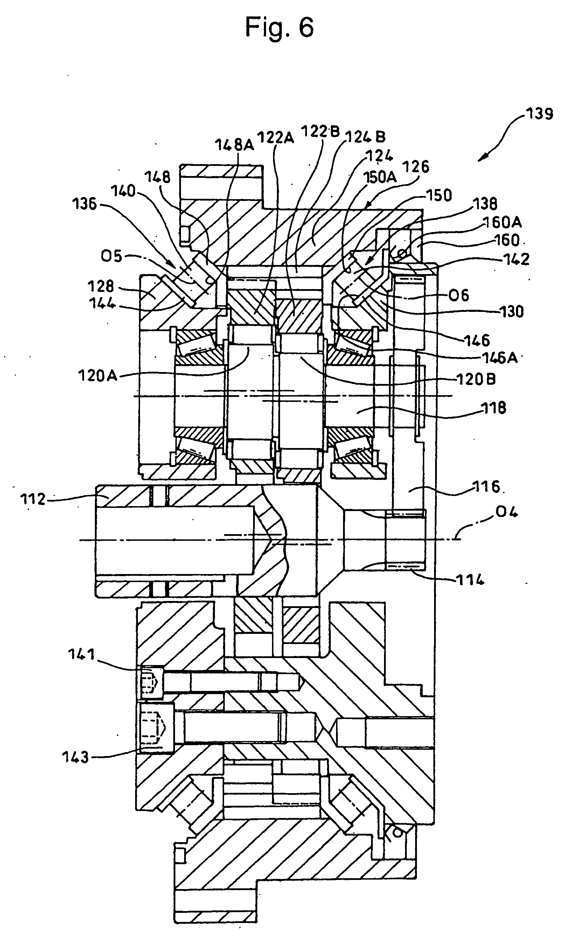

Further, in the above-described embodiment, the power is input to the input shaft through the orthogonal gear mechanism, but the input mechanism is not necessarily configured as the orthogonal gear mechanism. In addition, the configuration of the decelerating mechanism of the decelerating device is not limited to the above-described configuration. For example, the decelerating mechanism may be configured as a simple planetary gear, or may have a deceleration gear mechanism of a so-called distribution type internally meshing planetary gear structure as shown in Fig. 6.

In the embodiment shown in Fig. 6, the output of a motor (not shown) is transmitted to a spur pinion 114 formed in the front end of a connection member 112 through the connection member 112. The spur pinion 114 simultaneously meshes with three distribution gears 116 (in Fig. 6, only one is shown) , and three eccentric body shafts 118 (in Fig. 6, only one is shown) are simultaneously driven at the same speed in the same direction.

Eccentric bodies 120A and 120B are integrally formed with each eccentric body shaft 118, and when the eccentric bodies 120A and 120B of each eccentric body shaft 118 rotate at the same phase, the external tooth gears 122A and 122B oscillate. In this example, any one of an internal tooth gear 124 (casing 126) and first and second flange bodies 128 and 130 may be a fixed member or an output member. For example, in the case where the internal tooth gear 124 (casing 126) is fixed, the external tooth gears 122A and 122B rotate once when the eccentric body shafts 118 oscillate once, and rotate relative to the internal tooth gear 124 by an amount corresponding to a dimension difference between the internal tooth gear 124 and the external tooth gears 122A and 122B. This relative rotation is extracted from the first and second flange bodies 128 and 130 in the form of the revolution about the axis 04 of a decelerating device 139 of three eccentric body shafts 118. At this time, the rotation of the first and second flange bodies 128 and 130 (output members) relative to the internal tooth gear 124 (fixed member) is supported by the main bearings 136 and 138.

In addition, the casing 126 is formed by cast iron, and the first and second flange bodies 128 and 130 are incorporated into each other by bolts 141 and 143.

The configuration of the main bearing 136 (where the arrangements in the drawing are opposite in the transverse direction) is basically the same as that of the main bearing 78 shown in Fig. 4, and the configuration of the main bearing 138 is basically the same as that of the main bearing 76 shown in Fig. 4.

That is, the decelerating device 139 includes a pair of cylindrical roller rows 140 and 142 which are rolling elements of the main bearings 136 and 138 having the rotation axes 05 and 06 inclined relative to the axis 04 of the first and second flange bodies 128 and 130 (output members) by 45 degrees. In addition, the main bearings 136 and 138 include inner-race-side sheet metals 144 and 146 and outer-race-side sheet metals 148 and 150.

The outer-race-side sheet metals 148 and 150 extend up to positions deviated from rolling surfaces 148A and 150A, and regulate the axial movements of the outer pin 124B forming the internal tooth of the internal tooth gear 124 and the external tooth gears 122A and 122B. The inner-race-side sheet metal 146 extends up to a position deviated from the rolling surface 146A, and the extending portion comes into contact with a dust lip 160A of an oil seal 160.

The thicknesses of the outer-race-side sheet metals 148 and 150 are thicker than those of the inner-race-side sheet metals 144 and 146. In addition, even in this embodiment, the rotation speeds of the first and second flange bodies 128 and 130 relative to the casing 126 are not more than 100 rpm.

The decelerating device 139 according to the embodiment has the above-described configuration, and obtains the same advantage related to the main bearings 136 and 138 as that of the above-described embodiment.

In addition, in the above-described embodiments, the casing is formed by the cast iron, but the material of the casing (or the flange body) may be formed by, for example, aluminum or the like (because no special characteristic of the material of the bearing is required). In this case, it is possible to realize a decrease in weight of the decelerating device.

Further, in the above-described embodiments, the case is exemplified in which the sheet metal is applied to only the outer race or both the inner and outer races.

Furthermore, in the above-described embodiments, the cylindrical roller is mounted so as to be inclined by 45 degrees relative to the axis of the first and second flange bodies. However, the invention is not limited to the case in which the angle inclined relative to the axis of the cylindrical roller is 45 degrees.

The invention is particularly suitable for a decelerating device for driving a precise control machine such as a robot or a machining tool.

## Claims

1. A decelerating device (2) having a main bearing (18, 20) interposed between an output member (16) and a fixed member (12, 14), the decelerating device (2) comprising:
a pair of cylindrical roller rows (60, 61) which serves as a rolling element of the main bearing (18, 20) and includes a plurality of cylindrical rollers (60A, 61A) having rotation axes (02, 03) inclined relative to an axis (O1) of the output member (16);
a sheet metal (62, 63) which is a member constituting at least the outer race of the main bearing (18, 20) and of which both a rolling surface (62A, 63A) and an opposite rolling surface (62B, 63B) of the cylindrical roller (60A, 61A) are parallel to the rotation axis (02, 03) of the cylindrical roller (60A, 61A);
a deceleration gear mechanism (6) having an external tooth gear (44A to 44C) and an internal tooth gear (46), said output member (16) outputting a rotation decelerated by the deceleration gear mechanism (6);
receiving surfaces (16A, 16B) which are formed in the inner peripheries of axial ends of one of the output member (16) and the fixed member (12, 14) being located on the outside in the radial direction so as to be parallel to the rotation axis (02, 03) of the cylindrical roller (60A, 61A) and to support the opposite rolling surface (62A, 63A) of the sheet metal (62, 63), and
a groove or hole (46A) which is used to mount an outer pin (46B), forming an internal tooth of an internal tooth gear (46) inside the decelerating device (2), in the axial direction from the receiving surfaces (16A, 16B).

2. The decelerating device according to claim 1,
wherein the sheet metal (62, 63) extends up to a position deviated from the rolling surface (62A, 63A) and the extending portion (62C, 63C) regulates an axial movement of the outer pin (46B) forming the internal tooth of the internal tooth gear (46) inside the decelerating device (2).

3. The decelerating device according to claim 1 or 2,
wherein the sheet metal (62, 63) extends up to a position deviated from the rolling surface (62A, 63A) and the extending portion (62C, 63C) regulates an axial movement of a gear (44A, 44C) inside the decelerating device (2).

4. The decelerating device according to claim 1,
wherein the sheet metal (84; 146) extends up to a position deviated from the rolling surface (84A; 146A) and the extending portion (84C) comes into contact with a dust lip (70A; 160A) of an oil seal (70; 160).

5. The decelerating device according to any one of claims 1 to 4,
wherein crowning portions (90A1, 90A2)are respectively formed in both axial ends of each cylindrical roller (88A, 90A) , and a crowning amount of the axial outer crowning portion (90A1) of the decelerating device (2) is set to be larger than that of the axial inner crowning portion (90A2) of the decelerating device (2).

6. The decelerating device according to any one of claims 1 to 5,
wherein both inner and outer races of the main bearing (136, 138) are formed by the sheet metals (144, 146; 148, 150), and a thickness of the outer-race-side sheet metal (148, 150) is thicker than that of the inner-race-side sheet metal (144, 146).

7. The decelerating device according to any one of claims 1 to 6,
wherein a relative rotation speed between the output member (128, 130) and the fixed member (126) is not more than 100 rpm.

## Patentansprüche

1. Untersetzungsvorrichtung (2) mit einem Hauptlager (18, 20), welches zwischen einem Ausgangsglied (16) und einem festen Glied (12, 14) angeordnet ist, wobei die Untersetzungsvorrichtung (2) Folgendes aufweist:
ein Paar von Reihen (60, 61) von zylindrischen Rollen, welches als Wälzelement des Hauptlagers (18, 20) dient und eine Vielzahl von zylindrischen Rollen (60A, 61A) mit Drehachsen (02, 03) aufweist, die relativ zu einer Achse (O1) des Ausgangsgliedes (16) geneigt sind;
ein Metallblech (62, 63), welches ein Glied ist, welches zumindest den Außenring des Hauptlagers (18, 20) bildet, und wobei sowohl eine Wälzfläche (62A, 63A) als auch eine gegenüberliegende Wälzfläche (62B, 63B) der zylindrischen Rolle (60A, 61 A) parallel zur Drehachse (02, 03) der zylindrischen Rolle (60A, 61A) sind;
einen Untersetzungsgetriebemechanismus (6) mit einem außenverzahnten Zahnrad (44A bis 44C) und einem innenverzahnten Zahnrad (46), wobei das Ausgangsglied (16) eine Drehung ausgibt, die durch den Untersetzungsgetriebemechanismus (6) verlangsamt wurde;
Aufnahmeflächen (16A, 16B), die in den Innenumfängen der axialen Enden des Ausgangsgliedes (16) oder des festen Gliedes (12, 14) geformt sind, die an der Außenseite in radialer Richtung gelegen sind, so dass sie parallel zur Drehachse (02, 03) der zylindrischen Rollen (60A, 61A) sind und die gegenüberliegende Wälzfläche (62A, 63A) des Metallbleches (62, 63) tragen, und
eine Nut oder ein Loch (46A), welche bzw. welches verwendet wird, um einen äußeren Stift in axialer Richtung von den Aufnahmeflächen (16A, 16B) zu befestigen, der einen inneren Zahn eines innenverzahnten Zahnrades (46) innerhalb der Untersetzungsvorrichtung (2) bildet.

2. Untersetzungsvorrichtung nach Anspruch 1, wobei das Metallblech (62, 63) sich bis zu einer Position erstreckt, die von der Wälzfläche (62A, 63A) abweicht, und wobei der sich erstreckende Teil (62C, 63C) eine axiale Bewegung des äußeren Stiftes (46B) regelt bzw. festlegt, welcher den inneren Zahn des innenverzahnten Zahnrades (46) innerhalb der Untersetzungsvorrichtung (2) bildet.

3. Untersetzungsvorrichtung nach Anspruch 1 oder 2, wobei das Metallblech (62, 63) sich bis zu einer Position erstreckt, die von der Wälzfläche (62A, 63A) abweicht, und wobei der sich erstreckende Teil (62C, 63C) eine axiale Bewegung eines Zahnrades (44A, 44C) innerhalb der Untersetzungsvorrichtung (2) regelt bzw. festlegt.

4. Untersetzungsvorrichtung nach Anspruch 1, wobei das Metallblech (84; 146) sich bis zu einer Position erstreckt, die von der Wälzfläche (84A, 146A) abweicht, und wobei der sich erstreckende Teil (84C) in Kontakt mit einer Staublippe (70A; 160A) einer Öldichtung (70; 160) kommt.

5. Untersetzungsvorrichtung nach einem der Ansprüche 1 bis 4, wobei Wölbungsteile (90A1, 90A2) jeweils an beiden axialen Enden jeder zylindrischen Rolle (88A, 90A) geformt sind, und wobei ein Wölbungsausmaß des axial äußeren Wölbungsteils (90A1) der Untersetzungsvorrichtung (2) so eingestellt ist, dass es größer ist als jenes des axial inneren Wölbungsteils (90A2) der Untersetzungsvorrichtung (2).

6. Untersetzungsvorrichtung nach einem der Ansprüche 1 bis 5, wobei sowohl die Innen- als auch die Außenringe der Hauptlager (136, 138) durch die Metallbleche (144, 146; 148, 150) geformt werden und wobei eine Dicke des Metallbleches (148, 150) auf der Seite des Außenrings dicker ist als jene des Metallbleches (144, 146) auf der Seite des Innenrings.

7. Untersetzungsvorrichtung nach einem der Ansprüche 1 bis 6, wobei eine relative Drehgeschwindigkeit zwischen dem Ausgangsglied (128, 130) und dem festen Glied (126) nicht größer als 100 U/min ist.

## Revendications

1. Dispositif de décélération (2) comportant un roulement principal (18, 20) intercalé entre un élément de sortie (16) et un élément fixe (12, 14), le dispositif de décélération (2) comprenant :
deux rangées de rouleaux cylindriques (60, 61) qui servent d'élément de roulement d'un roulement principal (18, 20) et comprennent une pluralité de rouleaux cylindriques (60A, 61A) ayant des axes de rotation (02, 03) inclinés par rapport à un axe (O1) de l'élément de sortie (16) ;
une pièce en tôle (62, 63) qui est un élément constituant au moins la course extérieure du roulement principal (18, 20) et dont une surface de roulement (62A, 63A) et une surface de roulement opposée (62B, 63B) du rouleau cylindrique (60A, 61A) sont parallèles à l'axe de rotation (02, 03) du rouleau cylindrique (60A, 61A) ;
un mécanisme d'engrenages de décélération (6) comportant un engrenage à dents externes (44A à 44C) et un engrenage à dents internes (46), l'élément de sortie (16) produisant une rotation décélérée par le mécanisme d'engrenages de décélération (6) ;
des surfaces de réception (16A, 16B) qui sont formées dans les périphéries intérieures d'extrémité axiales de l'un ou l'autre de l'élément de sortie (16) et de l'élément fixe (12, 14), qui sont situées sur l'extérieur dans la direction radiale de façon à être parallèle à l'axe de rotation (02, 03) du rouleau cylindrique (60A, 61A) et à supporter la surface de roulement opposée (62A, 63A) de la pièce en tôle (62, 63), et
une gorge ou un trou (46A), servant pour monter une broche extérieure (46B), formant une dent interne d'un engrenage à dents internes (46) à l'intérieur du dispositif de décélération (2), dans la direction axiale par rapport aux surfaces de réception (16A, 16B).

2. Dispositif de décélération selon la revendication 1, dans lequel la pièce en tôle (62, 63) s'étend jusqu'à une position écartée de la surface de roulement (62A, 63A) et la partie en extension (62C, 63C) régule le mouvement axial de la broche extérieure (46B) formant la dent interne de l'engrenage à dents internes (46) à l'intérieur du dispositif de décélération (2).

3. Dispositif de décélération selon la revendication 1 ou 2, dans lequel la pièce en tôle (62, 63) s'étend jusqu'à une position écartée de la surface de roulement (62A, 63A) et la partie en extension (62C, 63C) régule le mouvement axial d'un engrenage (44A, 44C) à l'intérieur du dispositif de décélération (2).

4. Dispositif de décélération selon la revendication 1,
dans lequel la pièce en tôle (84 ; 146) s'étend jusqu'à une position écartée de la surface de roulement (84A, 146A) et la partie en extension (84C) vient en contact avec une lèvre de protection contre la poussière (70A ; 160A) d'un joint d'huile (70 ; 160).

5. Dispositif de décélération selon l'une quelconque des revendications 1 à 4,
dans lequel des portions de couronnement (90A1, 90A2) sont respectivement formées dans les deux extrémités axiales de chaque rouleau cylindrique (88A, 90A), et une quantité de couronnement de la partie de couronnement externe axiale (90A1) du dispositif de décélération (2) est réglée plus large que celle de la partie de couronnement interne axiale (90A2) du dispositif de décélération (2).

6. Dispositif de décélération selon l'une quelconque des revendications 1 à 5,
dans lequel les courses intérieure et extérieure du roulement principal (136, 138) sont constituées de pièces en tôle (144, 146 ; 148, 150), et l'épaisseur de la pièce en tôle du côté de la course extérieure (148, 150) est plus épaisse que celle de la pièce en tôle du côté de la course intérieure (144, 146) .

7. Dispositif de décélération selon l'une quelconque des revendications 1 à 6,
dans lequel la vitesse de rotation relative entre l'élément de sortie (128, 130) et l'élément fixe (126) n'est pas supérieure à 100 tours par minute.
